# EUROPEAN PATENT APPLICATION

(11) **EP 1 413 987 A2**
(43) Date of publication of application: **28.04.2004**
(21) Application number: 03256070.8
(22) Date of filing: 26.09.2003
(51) Int. Cl.: G06T 9/00

(54) **Accessing rendered graphics over a computer network**

(30) Priority: 23.10.2002 US 278697
(71) Applicant: Sun Microsystems, Inc., Santa Clara, California 95054 (US)
(72) Inventor: Satyanarayana, Nishtala, Cupertino California 95014 (US); Denyer, Peter, Fremont California 94539 (US)
(74) Representative: Davies, Simon Robert

(57) **Abstract**

A system and method are provided for accessing rendered graphics over a computer network. In accordance with one embodiment of the invention, an application renders graphics on a server machine in response to a request from a client, takes a snapshot of the output of the rendered graphical images, compresses the rendered images, and sends them through the computer network to the client. On the client's side, the compressed, rendered snapshot images are decompressed and displayed. The rendered-graphics experience is the same as if the application were rendered on the local machine. Various embodiments may be configured to use lossless compression schemes like GIF or lossy compression schemes like JPEG and MPEG. In one embodiment, the client machine uses a web browser to view the snapshots of the rendered images after they are uncompressed by the client.

## Description

### Field Of The Invention

The present invention relates to the field of computer graphics and, in particular, to accessing rendered graphics over a computer network.

### Background Of The Invention

For many computer applications, graphics are rendered by the computer and viewed by the user. Currently, all graphics are rendered on the user's local computer. More recently, resource intensive applications (e.g., processing and storage applications) are being shifted to centralized servers to minimize hardware and software costs. Furthermore, the advent of the Internet has created a need to access these centralized computer resources over the Web.

Moreover, a number of applications use high performance graphics rendering engines to display complex information or objects in graphical form. A high performance interface to the graphics rendering engine is required for acceptable performance. If these applications must be web-enabled, to create a web-portal, for example, then the software interfaces, the network bandwidth to the web device, and the rendering capabilities of the device become bottlenecks in web-enabling these applications. Accordingly, there is a need for providing rendered graphics to local computers in a computer system without a loss in performance.

### Summary Of The Invention

Accordingly, one embodiment of the invention provides a system and method for accessing rendered graphics over a computer network such as the Internet. An application renders graphics on a server machine in response to a request from a client, takes a snapshot of the output of the rendered graphical images, compresses the rendered images, and sends them through the Internet to the client. On the client's side, the compressed, rendered snapshot images are decompressed and displayed. The rendered-graphics experience is the same as if the application were rendered on the local machine. Various embodiments may use lossless compression schemes like GIF or lossy compression schemes like JPEG or MPEG. In one embodiment, the client machine uses a web browser to view the snapshots of the rendered images after they are uncompressed by the client.

### Brief Description Of The Drawings

Various embodiments of the invention will now be described in detail by way of example only with reference to the following drawings:
Figure 1 is a block diagram of a three-tier architecture.
Figure 2A is a flow diagram showing an overview of accessing graphics over a computer network according to one embodiment of the present invention.
Figure 2B is a flow diagram of rendering graphics on the server side and viewing the graphic by the client using a browser according to one embodiment of the present invention.
Figure 3 is a flow diagram illustrating a server-side process during rendering of graphics according to one embodiment of the present invention.
Figure 4 is a flow diagram illustrating a client-side process during rendering of graphics according to one embodiment of the present invention.
Figure 5 is a flow diagram showing compression during the rendering of graphical images according to one embodiment of the present invention.
Figure 6 is a flow diagram showing the compression process on a server according one embodiment of the present invention.
Figure 7 is a flow diagram showing the decompression process on a client according to one embodiment of the present invention.

### Detailed Description

### Overview of the Three-Tier Architecture

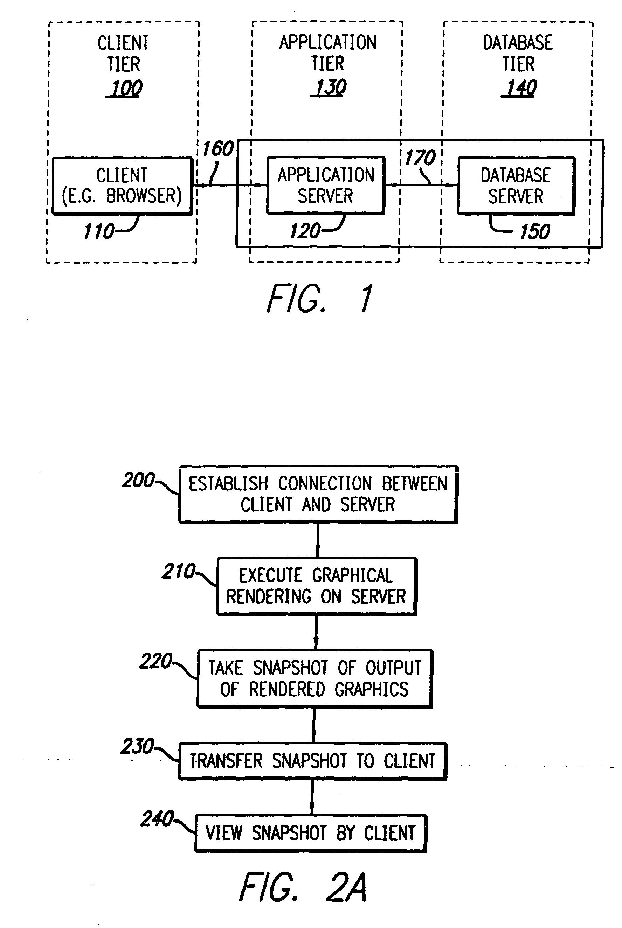

Figure 1 provides an example embodiment of a multi-tier computer system. Client tier 100 typically includes a computer that provides a graphic user interface (GUI) generated by a client 110, such as a web browser or other user interface application. Conventional browsers include Internet Explorer™ and Netscape Navigator™, among others. Client 110 generates a display from, for example, a specification of GUI elements, an applet, or both. An example of a specification of GUI elements includes a file containing input, form, and text elements defined using the Hypertext Markup Language (HTML). An example of an applet includes a program written using a platform-independent programming language, such as Java™, that runs when it is loaded by the browser.

Further application functionality is provided by application logic managed by application server 120 in application tier 130. The apportionment of application functionality between client tier 100 and application tier 130 may be based upon whether a "thin client" or "thick client" topology is desired. In a thin-client topology, the client tier is limited in functionality, in that the end user's computer on the client tier 100 is used primarily to display output and obtain input, while computing takes place in the application tier 130. A thick-client topology, on the other hand, uses a more conventional general purpose computer having processing, memory, and data storage abilities. Database tier 140 contains the data that is accessed by the application logic in application tier 130. Database server 150 manages the data, its structure, and the operations that can be performed on the data, its structure or both.

Application server 120 can include applications such as a corporation's scheduling, accounting, personnel, and payroll applications, for example. Application server 120 manages requests for the applications that are stored therein. Application server 120 can also manage the storage and dissemination of production versions of enterprise application logic (e.g., the versions that are currently being used by the corporate users). Database server 150 manages the database or databases that manage data for the applications. Database server 150 responds to requests to access the scheduling, accounting, personnel, and payroll applications' data, for example.

Connection 160 is used to transmit enterprise data between client tier 100 and application tier 150 and may also be used to transfer the enterprise application logic to client tier 100. The client tier 100 can communicate with the application tier 130 via, for example, a Remote Method Invocator (RMI) application programming interface (API) available from Sun Microsystems™, located in Santa Clara, California. The RMI API provides the ability to invoke software modules that reside on another computer system. Parameters are packaged and unpackaged for transmittal to and from the client tier 100. Connection 170 between application server 120 and database server 150 represents the transmission of requests for data and the responses to such requests from applications that reside in application server 120.

Elements of the client tier, application tier and database tier (e.g., client 110, application server 120, and database server 150, respectively) may execute within a single computer. However, in a typical system, elements of the client tier 100, application tier 130 and database tier 140 may execute within separate computers interconnected over a computer network, such as, for example, a LAN (local area network) or WAN (wide area network). For instance, the computers may be interconnected over the Internet.

### Rendering

Software programs interact with the user, and computer graphics enhance the interaction. Computer graphics are used to display pictorial information. Users expect to control their computer through icons and other pictures and graphics. Rendering is the process whereby a computer performs a graphics calculation and transfers the calculation to a display, such as a monitor.

Generally, rendering is a complicated process. First, the computer must perform rigorous calculations to determine which pixels on the screen are to be drawn and which color each pixel should be. This process typically requires specialized hardware and software that is not present on all client systems. Many of the current graphical-rendering applications are currently incapable of performing in such an environment. The approach described herein helps a user to access rendered graphics in a multi-tier computer system, thereby enabling the sharing of high-end and expensive graphics-intensive applications across multiple client devices.

### Accessing Rendered Graphics

Figure 2A is an illustration of the process of accessing rendered graphics over a computer network according to one embodiment of the present invention. At step 200, a connection is established between a client and a server. At step 210, graphical rendering is performed on the server. A snapshot is then taken of the rendered graphical images on the server at step 220. These snapshots are transferred to the client at step 230 and viewed on the client at step 240. As discussed above, the computer network may be a LAN, WAN or any other type of network. In one embodiment, the computer network is the Internet.

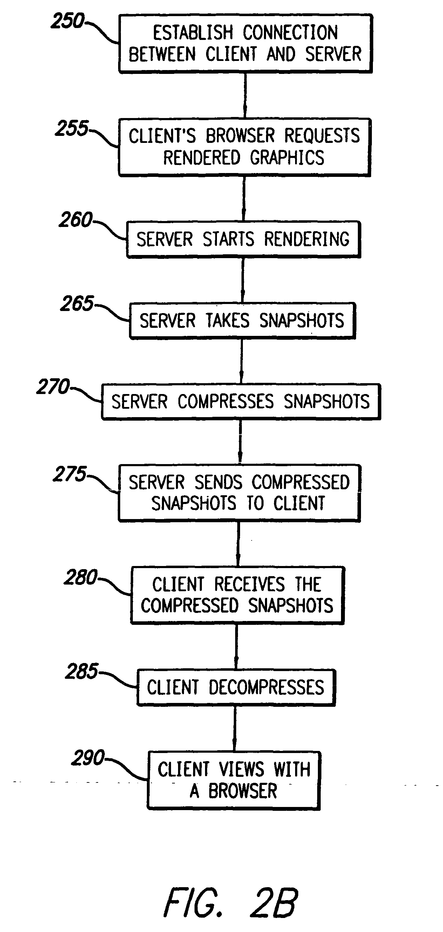

The user may use any program suitable for viewing graphics to view the images. For example, in one embodiment of the present invention, the user may use a web browser such as Internet Explorer™ or Netscape Navigator™ to view the images upon receipt. This embodiment is shown in Figure 2B. At step 250, the client and server establish a connection with each other for communication over the computer network. As discussed above, the computer network may be the Internet, for example. The client's browser makes a request to the server which requires rendered graphics at step 255. Upon receiving the request, the server starts rendering at step 260. At step 265, the server takes snapshots of the rendered graphical images. The server compresses these snapshots at step 270. These compressed images are sent to the client over the computer network at step 275. Client receives these compressed snapshot images at step 280 and decompresses them at step 285. The decompressed image is viewed using a browser at step 290.

For conventional downloads of graphical interfaces from the Web, content is created before it is presented on the Web or the content is compressed on-line for live video, for example. In contrast, the system and method described herein compress rendered graphics in real-time for display over a network, such as for a web-based client. As a result, a number of advantages may be achieved. For instance, as discussed above, graphics rendering systems can be quite expensive, depending on the sophistication of the function being rendered. For example, a detailed rendering of a car, with realistic lighting and rendered in real time to dynamically show the point of view, requires the combination of sophisticated and costly hardware and software. Conventional systems require the display system to be local to the rendering platform. Accordingly, conventional systems do not allow this type of rendering over computer networks such as the Web, intranet or extranet, for example. As discussed herein, a system is able to render graphics on a graphics server connected to a network, such as, for example, the Web, and allows the rendered picture to be seen on any web-browser or similar display application.

### Server-Side Rendering

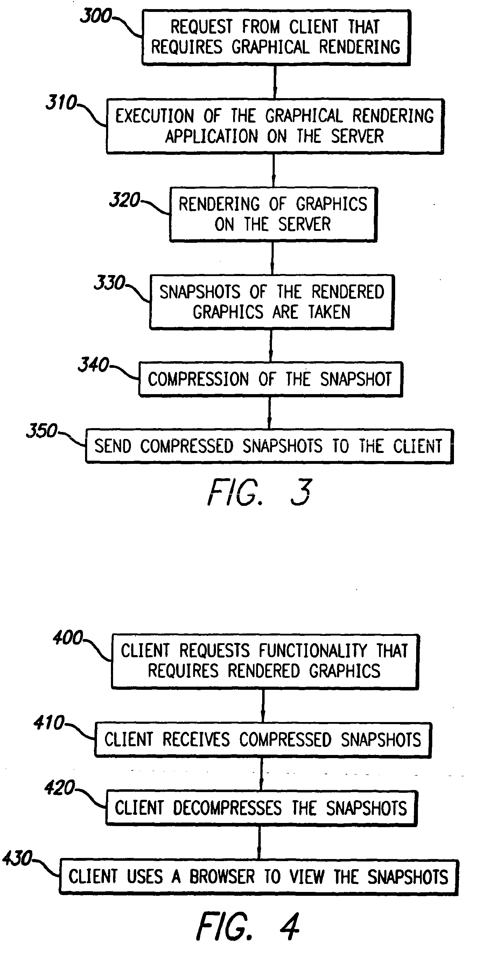

Figure 3 is an illustration of the process that occurs when the client makes a request that requires graphical rendering according to one embodiment of present invention. A server receives a request from a client that requires graphical rendering at step 300. The server starts executing the graphical-rendering application at step 310. At step 320, the rendering of the graphics is performed on the server, and one or more snapshots of these rendered graphics are taken at step 330. The snapshots are then compressed at step 340 and sent to a user machine (e.g., client) over the computer network at step 350.

### Client-Side Process

Figure 4 is an illustration of one embodiment of the process from the client-side, e.g., user machine. The user machine first determines that it needs functionality that requires graphical rendering at step 400. Upon receiving the request for rendering functionality, a server renders the graphics, after which compressed snapshots of the rendered graphical images are sent to the user machine. For example, the snapshots may be created and compressed as shown in the embodiment illustrated in Figure 3. The user machine receives the compressed snapshots at step 410. In another embodiment, the compressed snapshots may be decompressed by other client-side computers before being delivered to the user machine. The compressed snapshots are decompressed at step 420 and viewed on a browser or any other application suitable for viewing graphics at step 430. The experience in terms of the quality of the graphics and speed of processing the application is the same as the experience when graphical rendering is performed on the user machine itself.

### Compression

Compression is used because it enables the server to transmit the same amount of data in fewer bits, which saves bandwidth. Compression is performed to reduce the size of the data in order to save space and transmission time. In one embodiment of the present invention, compression is performed on just the data content. In another embodiment of the present invention, compression is performed on the entire transmission unit, including header data. In one embodiment, one method of content compression is to remove all extra space characters, insert a single repeat character to indicate a string of repeated characters, and substitute smaller bit strings for frequently occurring characters. In one embodiment, the compression of the rendered image may be performed using industry standard image compression protocols, such as JPEG, for example. In another embodiment of the present invention, a proprietary compression algorithm, known to both the client and the server systems, may be used.

One embodiment of the present invention uses a lossless compression technique to compress the snapshots of the rendered graphics. A lossless compression scheme is a data compression technique in which substantially no data is lost. With lossless compression, substantially every bit of data that was originally in the file remains after the file is uncompressed. Substantially all of the information is completely restored. This technique is preferably used while rendering text or spreadsheet files. One example of lossless compression is the Graphics Interchange File (GIF). One embodiment of the present invention uses the GIF format. GIF provides lossless compression and is generally used as an image format for Internet-based applications. The GIF format ensures that substantially all of the information in the original file is preserved after compression. This format also maintains the full quality of the original file.

In another embodiment of the present invention, a lossy compression technique is used to eliminate information that is not critical to creating an acceptable approximation of the original image. Examples of lossy compression techniques include the Moving Pictures Expert Group (MPEG) format and the Joint Photographic Experts Group (JPEG) format. Lossy compression reduces a file by permanently eliminating certain information. When the file is decompressed, only a part of the original information remains. Lossy compression is generally used for video and sound, where a certain amount of information loss will not be detected by most users. Lossy compression may be used for images. For example, the JPEG image file, commonly used for photographs and other complex still images on the Web, is a format that has lossy compression. Lossy compression offers the flexibility to decide on the quality of the picture versus the size of the file and the data transfer rate, so that the server can tailor the file according to the client's need. The performance of lossy-compression algorithms is most often expressed in operational rate-distortion curves, which are obtained by varying the compression parameter, such as a quality factor or a target compression ratio. The two variables generally used for these plots are the compression ratio and the Peak-Signal-to-Noise Ratio, which is a logarithmic function of the mean square between the original and reconstructed images.

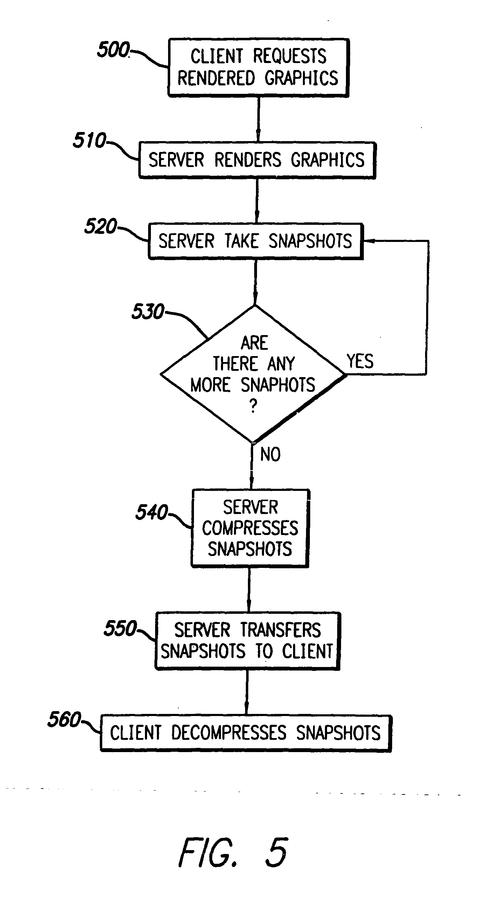

Figure 5 is an illustration of a compression process according to one embodiment of the present invention. A client requests rendered graphics at step 500. A server receives the request and renders the graphics at step 510. Snapshots are taken of the rendered graphics on the server at step 520. A check is made to see whether all the rendered graphic images have had snapshots taken at step 530. If the check result returns a positive answer, then the process at step 520 is repeated to take snapshots of remaining rendered graphics. If the check result returns a negative answer (e.g., no more snapshots to be taken), the process of compressing the snapshots takes place at step 540, for instance, using JPEG or MPEG compression. The compressed snapshots are sent to the client at step 550 and decompressed by the client at step 560.

### Compression Process on Server

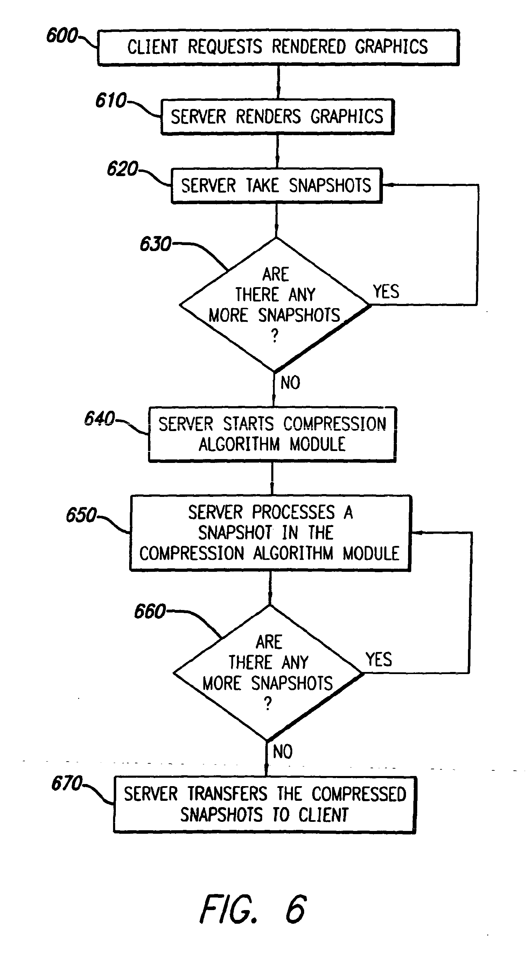

Figure 6 is an illustration of the compression process on a server when rendering graphics according to one embodiment of the present invention. A client requests that a server render graphics at step 600. A server renders the graphics at step 610. The server takes snapshots of the rendered graphical images at step 620. A check is made to see whether there are any more snapshots to be taken at step 630. If the check result returns a positive answer, then the process at step 620 is repeated to take snapshots of remaining rendered graphics. If the check result returns a negative answer (e.g., no more snapshots to be taken), the server starts a compression-algorithm module at step 640. The server processes a snapshot in the compression-algorithm module at step 650. A check is made to see whether any snapshot images have been left to be processed in the compression-algorithm module at step 660. If the check result returns a positive answer, then the process at step 650 is repeated to process the remaining snapshots in the compression-algorithm module. If the check result returns a negative answer (e.g., no more snapshots to be processed), the server transfers the compressed snapshots to the client over the computer network at step 670. As discussed above, the computer network may be the Internet, for example.

### Decompression Process on Client

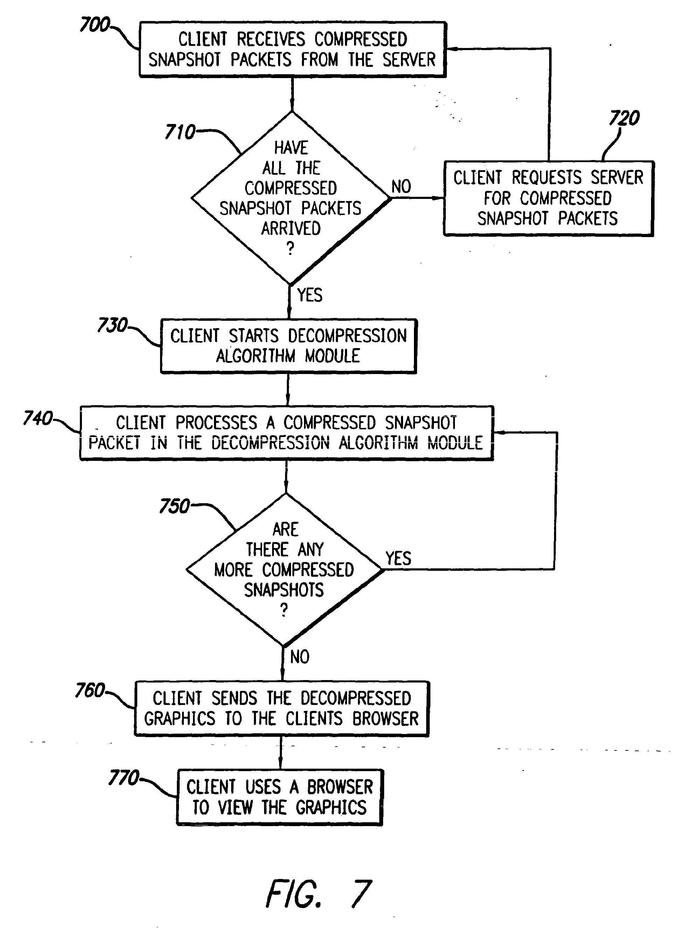

Figure 7 is an illustration of the decompression process on the client-side after rendering graphics on the server according to one embodiment of the present invention. A client (e.g., a computer on the client-side) receives compressed snapshot images as packets over the computer network from a server at step 700. A check is made to see whether all the compressed snapshot images have arrived at the client at step 710. If the check result returns a negative answer, then a request is sent to the server for the required compressed snapshots at step 720, and the process at step 700 is repeated. If the check result returns a positive answer because all the compressed snapshots have arrived, the client starts the decompression-algorithm module at step 730. The client processes a compressed snapshot in the decompression-algorithm module at step 740. A check is made to see whether any compressed snapshot images have yet to be decompressed at step 750. If the check result returns a positive answer, then the process at step 740 is performed until all the remaining compressed snapshot images are decompressed. If the check result returns a negative answer (e.g., no more compressed snapshots present), the client sends the decompressed graphical image to the browser at step 760. The client uses a browser to view the graphics at 770.

The data structures and code described in this detailed description are typically stored on a computer-readable storage medium, which may be any device or medium that can store code and/or data for use by a computer system. This includes, but is not limited to, magnetic and optical storage devices such as disk drives, magnetic tape, CDs (compact discs) and DVDs (digital versatile discs or digital video discs), and computer instruction signals embodied in a transmission medium (with or without a carrier wave upon which the signals are modulated). For example, the transmission medium may include a communications network, such as the Internet.

The foregoing descriptions of embodiments of the present invention have been presented for purposes of illustration in order to enable a person skilled in the art to appreciate and implement the invention. They are provided in the context of particular applications and their requirements, but are not intended to be exhaustive or to limit the present invention to the forms disclosed. Accordingly, many modifications and variations will be apparent to practitioners skilled in the art, and the scope of the present invention is defined by the appended claims.

## Claims

1. A method for accessing graphics over a computer network for a computer system comprising a client-side system and a server-side system comprising:
receiving a request from a client associated with the client-side system, wherein the request comprises a request for a rendered graphic;
performing a graphical rendering process;
taking a snapshot of an output of the graphical rendering process;
compressing the snapshot; and
sending the compressed snapshot to the client-side system.

2. The method of Claim 1, further comprising the step of receiving a request for a snapshot from the client.

3. The method of Claim 1 or 2, wherein the step of compressing the snapshot further comprises:
starting a compression algorithm module; and
processing a snapshot in the compression algorithm module.

4. The method of any preceding Claim, wherein the step of compressing the snapshot further comprises using a lossless compression scheme.

5. The method of Claim 4, wherein the step of using a lossless compression scheme comprises using a Graphic Interchange File (GIF) scheme.

6. The method of any of Claims 1 to 4, wherein the step of compressing the snapshot further comprises using a lossy compression scheme.

7. The method of Claim 6, wherein the step of using a lossy compression scheme comprises using an Motion Pictures Experts Group (MPEG) scheme.

8. The method of Claim 6, wherein the step of using a lossy compression scheme comprises using a Joint Photographic Experts Group (JPEG) Scheme.

9. The method of any preceding Claim, wherein the step of taking a snapshot further comprises the step of determining whether a snapshot has been taken for all of the output of the graphical rendering process.

10. A computer system operable to access rendered graphics across a computer network, comprising a server-side system comprising a server, wherein the server system is operable to:
receive a request over the computer network from a client-side system comprising a client, wherein the request requires graphical rendering;
perform a graphics rendering in accordance with the request to produce a rendered graphics;
take a snapshot of the rendered graphics;
compress the snapshot to produce a compressed snapshot; and
transmit the compressed snapshot to the client-side system.

11. The computer system of Claim 10, wherein the computer network is a local area network (LAN).

12. The computer system of Claim 10, wherein the computer network is a wide area network (WAN).

13. The computer system of Claim 12, wherein the computer network is an Internet.

14. The computer system of any of Claims 10 to 13, wherein the server-side system is operable to receive a request for a snapshot from the client-side system.

15. The computer system of Claim 14, wherein the server-side system further comprises a compression module operable to process a snapshot in accordance with a selected compression algorithm.

16. The computer system of any of Claims 10 to 15, wherein the server-side system is operable to compress the snapshot in accordance with a lossless compression technique.

17. The computer system of any of Claims 10 to 15, wherein the server system is operable to compress the snapshot in accordance with a lossy compression technique.

18. A computer program comprising instructions that when loaded into at least one machine cause said at least one machine to perform the method of any of Claims 1 to 9.
